# EUROPEAN PATENT APPLICATION

(11) **EP 2 762 345 A2**
(43) Date of publication of application: **06.08.2014**
(21) Application number: 13001887.2
(22) Date of filing: 11.04.2013
(51) Int. Cl.: B60K 37/06, G06F 3/01

(54) **Instruction feedback system and method for a vehicle**

(30) Priority: 30.01.2013 CN 201310035941
(71) Applicant: Lite-On It Corporation, Taipei (TW)
(72) Inventor: Graf, Stefan, 35578 Wetzlar (DE); Cavallucci, Gilles, 35578 Wetzlar (DE)
(74) Representative: Müller-Boré & Partner Patentanwälte PartG mbB

(57) **Abstract**

The invention provides an instruction feedback system and method for operating devices and systems in a vehicle to reduce operator distractions. A gesture-recognizing pad is provided to receive an operating instruction and deliver the operating instruction to a computer control system; and a feedback apparatus is connected to the computer control system and generating a feedback signal for acknowledging the vehicle operator whether the gesture-recognizing pad has received said operating instruction.

## Description

### BACKGROUND OF THE INVENTION

### 1. Technical Field

The present invention relates to an instruction feedback system and method for a vehicle. More particularly, the present invention relates to an instruction feedback system and method that provide feedback to a vehicle operator after the operator has inputted a command, to acknowledge receipt of the command or not.

### 2. Description of Related Art

Most control systems in a vehicle require physical movements, such as pushing a button to turn on a radio, open a window or turn on an air conditioning system. However, these actions tend to distract a driver's attention to traffic and may cause a hazardous situation. Recently, speech recognition and voice command systems have been developed to alleviate the amount of physical interaction. However, such systems have drawbacks. For example, if a driver fails to execute words or commands accurately, the speech recognition system will not operate properly, and could increase driver's distraction. In addition, the standard voice command system usually understand only several of the most basic commands, and usually the driver may need to give a command for several times that may be disturbing to other passengers in the vehicle.

Another system released recently is touch pad or sensor pad, which is mounted on the vehicle. The vehicle operator touches the pads to command performance of a corresponding function. The vehicle operator can be able to blindly input commands via the pads. Thus, the problem is that the vehicle operator does not know if the system has recognized the input correctly.

### SUMMARY OF THE INVENTION

In order to solve the disadvantage above, one aspect of the present invention is to provide an instruction feedback system for a vehicle, comprising: a gesture-recognizing pad to receive an operating instruction inputted by a vehicle operator and deliver the operating instruction to a computer control system; and a feedback apparatus, which is connected to the computer control system, to generate a feedback signal for acknowledging the vehicle operator whether the gesture-recognizing pad has received said operating instruction.

Another aspect of the present invention provides a method for controlling one or more systems in a vehicle with a confirmation to a vehicle operator, comprising: (a) applying an operating instruction to a gesture-recognizing pad; (b) delivering the operating instruction from the gesture-recognizing pad to a computer control system; and (c) delivering a signal from the computer control system to a feedback apparatus; and (d) notifying the vehicle operator whether the operating instruction has been identified via the feedback apparatus.

To improve understanding of the different aspects of the disclosure, the techniques employed in the present invention to achieve the foregoing objectives, characteristics and effects thereof are described hereinafter by way of examples with reference to the accompanying drawings.

### BRIEF DESCRIPTION OF THE DRAWINGS

FIG. 1 is a schematic diagram showing an embodiment of the instruction feedback system of the invention.
FIG. 2 is a flow chart illustrating a mode of operation of the embodiment of FIG. 1.

### DETAILED DESCRIPTION OF THE INVENTION

The present invention develops an instruction feedback system for a vehicle, comprising: a gesture-recognizing pad to receive an operating instruction inputted by a vehicle operator and deliver the operating instruction to a computer control system; and a feedback apparatus, which is connected to the computer control system, to generate a feedback signal for acknowledging the vehicle operator whether the gesture-recognizing pad has received said operating instruction correctly.

The gesture-recognizing pad and the computer control system are connected to each other via wired cable, wireless connection or telematics. Telematics is the blending of computers and wireless telecommunications, and can refer to automobile systems that make use of such technologies. The telematics provides the vehicle operator with an enhanced ability to safely control a large number of systems and devices included within the vehicle, such as, without limitation, CD/DVD players, navigation systems, air conditioning systems, radios and information services.

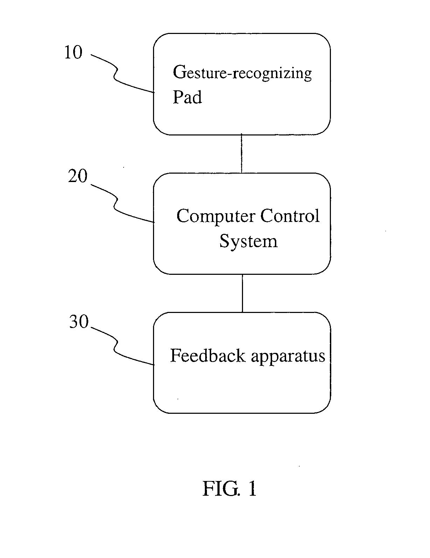

Referring to FIG. **1****,** there is shown a schematic diagram of an embodiment of the invention. By means of the embodiment, a driver or a vehicle operator of vehicle is able to generate operating instructions to operate a number of systems and devices contained in the vehicles, such as to turn on CD/DVD players, to use the navigation systems, to turn on air conditioning systems, and the like. To generate operating instructions in accordance with the invention, a gesture-recognizing pad **10** is provided. Preferably, the gesture-recognizing pad **10** is mounted proximate to the vehicle operator's sides so that the operator can easily input the gesture command. The gesture-recognizing pad **10** can be an infrared (IR) pad which uses the infrared to detect the gesture, by means of the operator's hand, finger or other part of the body, or by means of a stylus or other instruments. The gesture-recognizing pad **10** can also use the ultrasoniz wave or any other gesture recognizing technology to detect the gesture command. The design of the gesture-recognizing pad **10** is well-known in the art and is not fully described herein. Usually, the gesture-recognizing pad **10** comprises devices that can distinguish the movements of operator's fingers. When a gesture is detected by the gesture-recognizing pad **10**, it will generate a corresponding signal of the operating instruction to the computer control system **20**. The signal may be coupled to the computer control system **20** by means of wired link (not shown) such as suitable kinds of electrical cables, or wireless link (not shown) such as infrared radiation (IR) transmission, Bluetooth transmission, WIFI, RF and the like. Alternatively, signals may be transmitted over wired paths, for example, an optical fiber (not shown) extending between the gesture-recognizing pad **10** and the computer control system **20**. Furthermore, a wireless charging device is contained in the gesture-recognizing pad **10** so that the gesture-recognizing pad **10** is to be wireless charged by the vehicle's power supply.

Further referring to FIG. **1**, a feedback apparatus **30** is connected to the computer control system **20.** Preferably, the feedback apparatus **30** is a mobile phone or a smart phone. The term "mobile phone" is a phone built on a mobile computing platform, with more advanced computing ability and connectivity than a feature phone, and is combined the functions of a personal digital assistant (PDA) and a mobile phone or camera phone, portable media players, GPS navigation units, etc. Preferably, the feedback apparatus **30** is to be wireless charged by the vehicle's power supply or the feedback apparatus **30** is placed on the gesture-recognizing pad equipped with the wireless charging device to be wireless charged. The connection between the feedback apparatus **30** (mobile phone) and the computer control system **20** is programmed as an application software (APP). The term "application software", also know as "APP", refers to computer software designed to help the user to perform specific tasks. In the present invention, the APP is programmed to receive a confirmation released from the computer control system **20** and then drives the feedback apparatus **30** (mobile phone) to generate a feedback signal for acknowledging the vehicle operator whether the gesture-recognizing pad **10** has received said operating instruction correctly. As a useful feature, the mobile phone provides as an acoustic, optical and haptic feedback, for example, vibration, a flashing light, a color change, a sound or the combination thereof as a feedback signal after the vehicle operator has completed entering an operating instrution, comfirming that the instruction feedback system has correctly received the inputted operating instrution or not. Furthermore, the feedback signal is categorized as a confirmation signal and an error signal.

The instruction feedback system of the present invention may further comprise a vehicle systems controller (not shown), connected to receive commands from the computer control system **20.** The vehicle systems controller responds to the received commands in a conventional manner to operate respective devices and systems, such as to turn on/off CD/DVD players, to track navigation systems, or to turn on/off air conditioning systems.

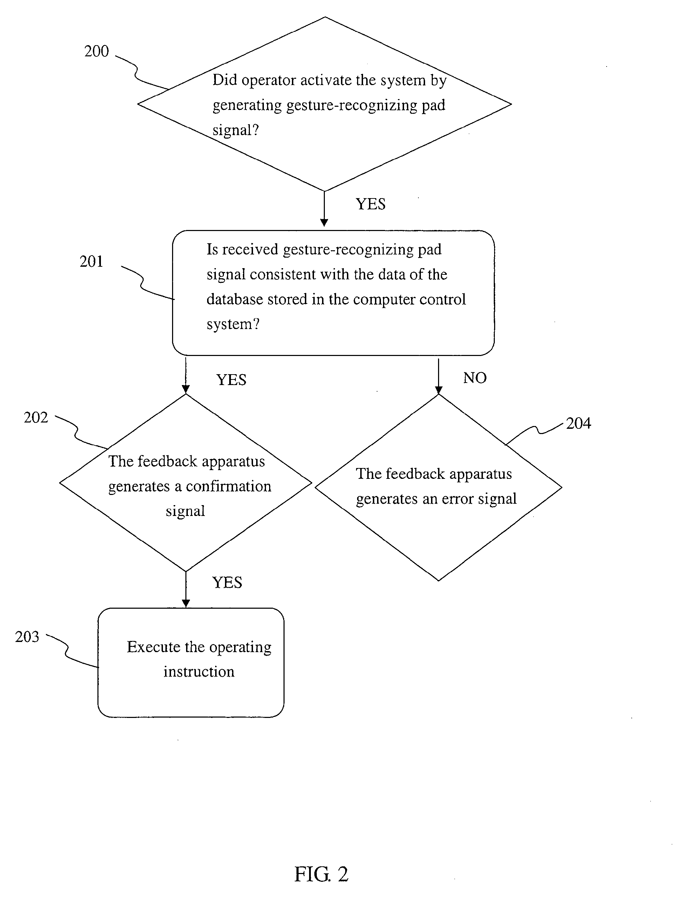

Referring to FIG. **2****,** which is a flow chart illustrating a mode of operation of the embodiment of FIG. **1****,** function block **200** shows the operator activates the system, that is, the operator inputs an operating instruction to the gesture-recognizing pad **10.** The gesture-recognizing pad **10** would then transmit a signal, which is corresponding to the operating instruction, to the computer control system **20.** A database is stored in the computer control system **20.** As shown by function block **201,** as soon as the computer control system **20** receives the signal of the operating instruction inputted by the operator to the gesture-recognizing pad **10,** it examines if the signal is consistent with a corresponding data in the database of the computer control system **20.** If yes, as shown by function block **202,** the computer control system **20** would drive the feedback apparatus **30** to generate a feedback signal (comfirmation signal) for acknowledging the vehicle operator that the gesture-recognizing pad **10** has correctly received said operating instruction, and then the associated operating instruction is executed, as shown by function block **203.** For example, if the operator inputs an operating instuction of trun on the air conditioning system to the gesture-recognizing pad **10,** the gesture-recognizing pad **10** then transmits a signal to the computer control system **20.** If the computer control system **20** recognizes the signal, then the computer control system **20** transmits an instruction to the feedback apparatus **30** via an APP. As a result, the feedback apparatus **30** is thus provided a feedback signal, such as a statement like "Turn on the air conditioning system is received" confirming that the system has received the operating instruction correctly, and then the instruction is executed. On the other hand, if the signal is not consistent with a respective data in the database, as shown by function block **204,** the feedback apparatus **30** expresses an error signal or a failure message/sound to the operator to notice the operator that the operating instruction is not inputted correctly. For example, the feedback apparatus **30** could make a statement, such as "Operating instruction is not correct," or "Your instruction cannot be distinguished," and the like, so that the operator is acknowledged that the operating instruction is not recognized. The operator can re-input the operating instuction again until the feedback apparatus 30 provides the confirmation signal.

Using the instruction feedback system of the present invention, the vehicle operator can use the gesture-recognizing pad **10** to command performance of a corresponding function. In addition, the vehicle operator is being acknowledged that whether the instruction feedback system recognizes the input instruction, so that the operator does not need to check by vision and thus the distraction of the surrounding traffic and road conditions is significantly reduced.

It is to be understood that embodiments of the invention can also be used in connection with all kinds of vehicles, such as car, motorcycle or airplane.

While the invention has been described in connection with what is presently considered to be the most practical and preferred embodiments, it is understood that the invention is not to be limited to the disclosed embodiment, but on the contrary, is intended to cover various modifications and equivalent arrangements included within the spirit and scope of the appended claims.

## Claims

1. An instruction feedback system for a vehicle, comprising:
a gesture-recognizing pad to receive an operating instruction inputted by a vehicle operator and deliver the operating instruction to a computer control system; and
a feedback apparatus, which is connected to the computer control system, to generate a feedback signal for acknowledging the vehicle operator whether the gesture-recognizing pad has received said operating instruction.

2. The instruction feedback system of claim 1, wherein said feedback apparatus is a mobile phone.

3. The instruction feedback system of any one of the preceding claims, wherein the feedback signal is selected from the group consisting of acoustic, optical and haptic feedback.

4. The instruction feedback system of claim 2, wherein the connection between the mobile phone and the computer control system is programmed as an application software (APP).

5. The instruction feedback system of any one or more of the preceding claims, wherein the gesture-recognizing pad is mounted proximate to the vehicle operator's sides and is to be wireless charged by the vehicle's power supply.

6. The instruction feedback system of any one or more of the preceding claims, wherein the feedback apparatus is to be wireless charged by the vehicle's power supply.

7. The instruction feedback system of any one or more of the preceding claims, wherein the operating instruction is delivered to the computer control system via a wireless link or wired link.

8. The instruction feedback system of any one or more of the preceding claims, wherein the feedback signal is categorized as a confirmation signal and an error signal.

9. The instruction feedback system of any one or more of the preceding claims, wherein the gesture-recognizing pad is an infrared pad.

10. A method for controlling one or more systems in a vehicle with a feedback to a vehicle operator, comprising:
(a) applying an operating instruction to a gesture-recognizing pad;
(b) delivering the operating instruction from the gesture-recognizing pad to a computer control system;
(c) delivering a signal from the computer control system to a feedback apparatus; and
(d) notifying the vehicle operator whether the operating instruction has been identified via the feedback apparatus.

11. The method of claim 10, wherein the feedback apparatus is a mobile phone.

12. The method of claim 11, the mobile phone is connected to the computer control system through an APP.

13. The method of any one or more of claims 10-12, wherein the vehicle operator is notified by a feedback signal selected from the group consisting of acoustic, optical and haptic feedback.

14. The method of claim 13, wherein the feedback signal is categorized as a confirmation signal and an error signal.

15. The method of any one or more of claims 10-14, wherein the gesture-recognizing pad is an infrared pad.
